# EUROPÄISCHE PATENTSCHRIFT

(11) **EP 4 105 018 B1**
(45) Veröffentlichungstag und Bekanntmachung des Hinweises auf die Patenterteilung: **28.08.2024**
(21) Anmeldenummer: 22175038.3
(22) Anmeldetag: 24.05.2022
(51) Int. Cl.: B32B 15/12, B32B 27/10

(54) **FLAMMHEMMENDER FLÄCHENFÖRMIGER KARTONVERBUND**
FLAME-RETARDANT SHEETLIKE CARDBOARD COMPOSITE
COMPOSITE EN CARTON PLAN IGNIFUGE

(30) Priorität: 18.06.2021 DE 202021103285 U
(43) Veröffentlichungstag der Anmeldung: 21.12.2022
(73) Patentinhaber: Pfäffle GmbH Verpackungswerk, 73547 Lorch (DE)
(72) Erfinder: Behrens, Detlef, 46395 Bocholt (DE)
(74) Vertreter: Frey, Sven Holger

(56) Entgegenhaltungen:
- WO-A1-2020/216846
- DE-A1- 10 106 947
- DE-A1- 102008 013 444
- US-A- 3 934 066

## Beschreibung

Die Erfindung betrifft eine Rückwand eines Kühlgeräts. Die Erfindung betrifft ebenfalls ein Kühlgerät, insbesondere Kühl- oder Eisschrank mit einer derartigen Rückwand.

Nach einem Großbrand im Jahr 2017, dessen Brandursache nachweislich ein defekter Kühlschrank war, wurde die Aufmerksamkeit verstärkt auf die Sicherheit von elektronischen Haushaltsgeräten in Bezug auf Brandschutz gerichtet.

Damit einher ging die Änderung auf die heutige Norm IEC 60335-2-24:2020 ed.8: "Sicherheit elektronischer Geräte für den Hausgebrauch und ähnliche Zwecke, Teil-24: besondere Anforderungen für Kühl-/Gefriergeräte und Speiseeis- und Eisbereiter", die in ihrer neuen Form eine Feuerresistenz von Kühlschrankrückwänden empfiehlt. Die Änderung der Norm (Kapitel 22/Aufbau) betrifft die Beschaffenheit von Kontaktmaterialien mit der Isolation eines Kühlgeräts. Jegliche Kontaktmaterialien sollen der Norm zufolge eine gewisse Feuerresistenz aufweisen bzw. flammhemmend oder feuerfest ausgeführt sein. Da Kühlgerätrückwände in direktem Kontakt mit dem Isolationsmaterial stehen, müssen sie diese Vorgaben erfüllen. Die Einhaltung dieser Norm muss von offiziellen Prüfinstituten mittels Flammtest(s) überprüft werden.

Aus der Praxis ist es bekannt, Kühlgerätrückwände aus einem Aluminium-Karton-Verbund zu fertigen. Der verwendete Verbund basiert in der Regel auf den Materialien Karton, Aluminium und Low Density-Polyethylen. Derartige Verbunde bestehen jedoch bislang die erwähnten Flammtest(s) nicht.

Die US 3,934,066 A betrifft feuerhemmende intumeszierende Laminatsysteme, die zur Anwendung auf brennbaren oder hitzeempfindlichen Substraten geeignet sind, um derartige Substrate vor Feuer und Hitze zu schützen.

Die WO 2020/216846 A1 betrifft eine feuerhemmende Platte und ein Verfahren zur Herstellung dieser Platte. DE102008013444 A1 und DE10106947 A1 betreffen eine Rückwand eines Kühlgerätes, die einen Karton und ein dampfdiffusionsdichtes Material aufweist.

Der vorliegenden Erfindung liegt daher die Aufgabe zu Grunde eine Rückwand eines Kühlgeräts der eingangs erwähnten Art zu schaffen, welche die Nachteile des Standes der Technik vermeidet, insbesondere die neuen Anforderungen bezüglich des Brandschutzes erfüllt.

Diese Aufgabe wird erfindungsgemäß durch eine Rückwand eines Kühlgeräts mit den in Anspruch 1 genannten Merkmalen gelöst.

Es wird eine Rückwand eines Kühlgeräts vorgeschlagen, welche aus einem flammhemmenden flächenförmigen Kartonverbund gebildet ist, welcher einen Karton und ein dampfdiffusionsdichtes Material aufweist und welcher als einander überdeckende Schichten einer ersten Schichtfolge wenigstens umfasst:
- eine Kartonverbundschicht aus dem Karton und dem dampfdiffusionsdichten Material;
- eine Brandschutzbeschichtung; und
- eine Schutzbeschichtung.

Mit dem Ansatz einen Kartonverbund aufweisend einen Karton und ein dampfdiffusionsdichtes Material, z. B. einen Aluminium-Karton-Verbund, mit einer zusätzlichen brandhemmenden Beschichtung zu versehen, wurden positive Testergebnisse erzielt. Dabei konnten sowohl ein geeignetes Brandschutzmittel für die Beschichtung als auch ein Schutzlack, der diese vor Abrieb und Feuchtigkeit schützen soll, gefunden werden.

Die Kartonverbundschicht kann als einander überdeckende Schichten einer zweiten Schichtfolge umfassen:
- eine Schicht mit dem dampfdiffusionsdichten Material;
- eine Haftvermittlerschicht; und
- eine Kartonschicht.

Die Kartonverbundschicht kann alternativ als einander überdeckende Schichten einer dritten Schichtfolge umfassen:
- eine Kartonschicht;
- eine erste Haftvermittlerschicht;
- eine Schicht mit dem dampfdiffusionsdichten Material; und
- eine zweite Haftvermittlerschicht.

Die Kartonverbundschicht kann alternativ als einander überdeckende Schichten einer vierten Schichtfolge umfassen:
- eine erste Kartonschicht;
- eine erste Haftvermittlerschicht;
- eine Schicht mit dem dampfdiffusionsdichten Material;
- eine zweite Haftvermittlerschicht; und
- eine zweite Kartonschicht.

Die Kartonverbundschicht kann alternativ als einander überdeckende Schichten einer fünften Schichtfolge umfassen:
- eine erste Schicht mit dem dampfdiffusionsdichten Material;
- eine erste Haftvermittlerschicht;
- eine Kartonschicht;
- eine zweite Haftvermittlerschicht; und
- eine zweite Schicht mit dem dampfdiffusionsdichten Material.

Vorteilhaft ist es, wenn die Brandschutzbeschichtung ein dämmschichtbildendes oder intumeszierendes Brandschutzmittel, insbesondere für Holz und Holzwerkstoffe aufweist. Es kann sich sonach um eine intumeszierende oder dämmschichtbildende Brandschutzbeschichtung für Holz und Holzwerkstoffe, insbesondere gemäß DIN 4102-B1 im trockenen Innenbereich handeln. Die Wirkungsweise des Brandschutzmittels beruht auf der Entwicklung von inerten Gasen, wodurch das Substrat bei Hitzeeinwirkung durch eine nicht entflammbare Schaumschicht geschützt wird. Bei Brandeinwirkung kommt es zur Erzeugung von Inertgasen sowie zur Bildung einer wärmedämmenden Schaumschicht. Das Grundmaterial wird dabei nicht beschädigt.

Das Brandschutzmittel kann einen Säurespender, insbesondere Ammoniumpolyphosphat, wenigstens einen Kohlenstoffspender, ein Treibmittel, insbesondere Melamin und vorzugsweise einen oder mehrere weitere Zusatzstoffe aufweisen.

Das Flächengewicht der Brandschutzbeschichtung kann in einem Bereich von 40 g/m² bis 200 g/m² liegen. Aus Kosten- und Gewichtsgründen sollte das Flächengewicht möglichst optimal sein.

Die Dicke der Schicht mit dem dampfdiffusionsdichten Material bzw. der ersten und/oder der zweiten Schicht mit dem dampfdiffusionsdichten Material kann in einem Bereich von 6 µm bis 200 µm liegen.

Das dampfdiffusionsdichte Material kann Aluminium aufweisen. Es kommen hierbei jedoch auch andere Materialien in Frage.

Zwischen der Schicht mit dem dampfdiffusionsdichten Material bzw. der zweiten Schicht mit dem dampfdiffusionsdichten Material und der Brandschutzbeschichtung kann eine Grundierungs- oder Primerschicht vorhanden sein.

Zwischen der Brandschutzbeschichtung und der Schutzbeschichtung kann eine zusätzliche Haftvermittlerschicht vorhanden sein.

Die Haftvermittlerschicht bzw. die erste Haftvermittlerschicht, die zweite Haftvermittlerschicht und/oder die zusätzliche Haftvermittlerschicht können Polyethylen, insbesondere mit einem Flächengewicht von 20 g/m², einen Heißleim oder dergleichen aufweisen.

Das Flächengewicht der Kartonschicht bzw. der ersten und/oder der zweiten Kartonschicht kann in einem Bereich von 200 g/m² bis 1000 g/m², insbesondere von 350 g/m² bis 550 g/m², liegen. Bei der Kartonschicht kann es sich um einen Graukarton handeln.

Die Schutzbeschichtung kann einen Schutzlack, eine ähnliche wässrige Beschichtung, Kunststoff, eine Folie, insbesondere eine Kunststofffolie oder Aluminium aufweisen. Die Schutzbeschichtung dient zum Schutz vor Abrieb, Verschmutzung und Feuchtigkeit.

Anspruch 14 betrifft ein Kühlgerät, insbesondere einen Kühl- oder Eisschrank mit einer vorstehend genannten Rückwand.

Vorteilhafte Ausgestaltungen und Weiterbildungen der Erfindung sind in den Unteransprüchen angegeben.

Nachfolgend wird die Erfindung anhand der Zeichnung näher erläutert.

Es zeigen:
- Figur 1: eine schematische Darstellung eines flammhemmenden flächenförmigen Kartonverbunds in einer ersten Ausführungsform;
- Figur 2: eine schematische Darstellung eines flammhemmenden flächenförmigen Kartonverbunds in einer zweiten Ausführungsform;
- Figur 3: eine schematische Darstellung eines flammhemmenden flächenförmigen Kartonverbunds in einer dritten Ausführungsform; und
- Figur 4: eine schematische Darstellung eines flammhemmenden flächenförmigen Kartonverbunds in einer vierten Ausführungsform.

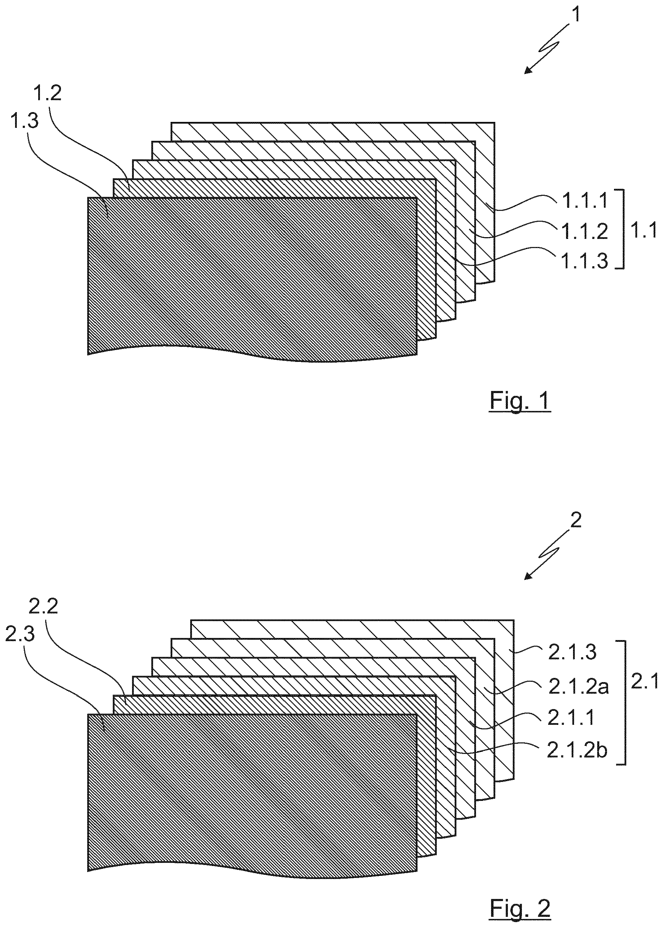

In Figur 1 ist ein flammhemmender flächenförmiger Kartonverbund 1 aufweisend einen Karton und ein dampfdiffusionsdichtes Material zur Herstellung von nicht dargestellten erfindungsgemäßen Rückwänden von Kühlgeräten in einer ersten Ausführungsform stark vereinfacht dargestellt. Der Kartonverbund 1 umfasst wenigstens als einander überdeckende Schichten einer ersten Schichtfolge:
- eine Kartonverbundschicht 1.1 aus dem Karton und dem dampfdiffusionsdichten Material;
- eine Brandschutzbeschichtung 1.2; und
- eine Schutzbeschichtung 1.3.

Die Kartonverbundschicht 1.1 kann als einander überdeckende Schichten einer zweiten Schichtfolge umfassen:
- eine Schicht mit dem dampfdiffusionsdichten Material 1.1.1;
- eine Haftvermittlerschicht 1.1.2; und
- eine Kartonschicht 1.1.3.

In Figur 2 ist ein flammhemmender flächenförmiger Kartonverbund 2 aufweisend einen Karton und ein dampfdiffusionsdichtes Material zur Herstellung von nicht dargestellten erfindungsgemäßen Rückwänden von Kühlgeräten in einer zweiten Ausführungsform stark vereinfacht dargestellt.

Der Kartonverbund 2 umfasst wenigstens als einander überdeckende Schichten einer ersten Schichtfolge:
- eine Kartonverbundschicht 2.1 aus dem Karton und dem dampfdiffusionsdichten Material;
- eine Brandschutzbeschichtung 2.2; und
- eine Schutzbeschichtung 2.3.

Wie aus Figur 2 weiter ersichtlich kann die Kartonverbundschicht 2.1 als einander überdeckende Schichten einer dritten Schichtfolge umfassen:
- eine Kartonschicht 2.1.3;
- eine erste Haftvermittlerschicht 2.1.2a;
- eine Schicht mit dem dampfdiffusionsdichten Material 2.1.1; und
- eine zweite Haftvermittlerschicht 2.1.2b.

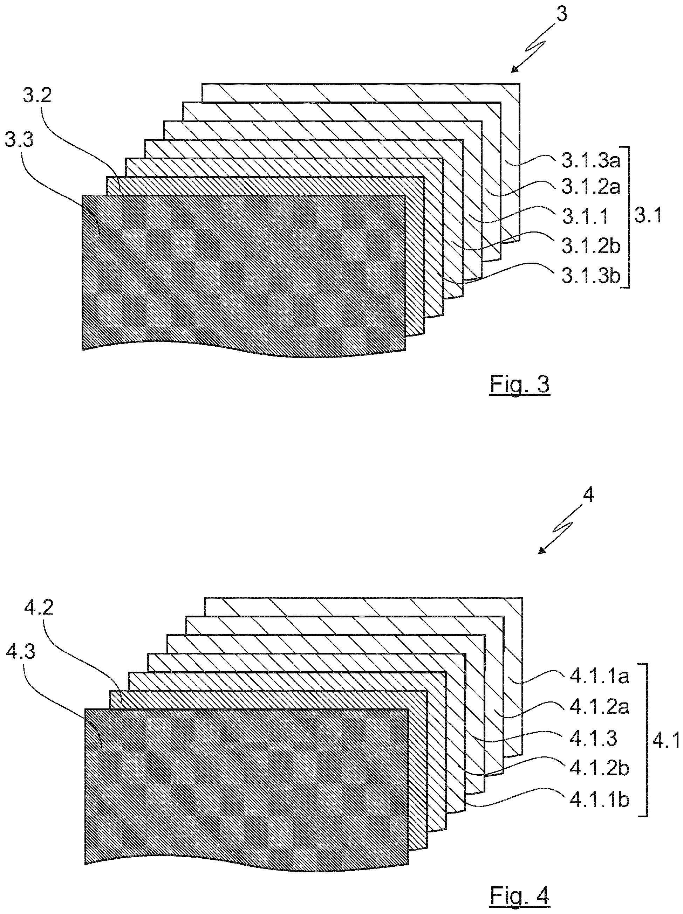

In Figur 3 ist ein flammhemmender flächenförmiger Kartonverbund 3 aufweisend einen Karton und ein dampfdiffusionsdichtes Material zur Herstellung von nicht dargestellten erfindungsgemäßen Rückwänden von Kühlgeräten in einer dritten Ausführungsform stark vereinfacht dargestellt.

Der Kartonverbund 3 umfasst wenigstens als einander überdeckende Schichten einer ersten Schichtfolge:
- eine Kartonverbundschicht 3.1 aus dem Karton und dem dampfdiffusionsdichten Material;
- eine Brandschutzbeschichtung 3.2; und
- eine Schutzbeschichtung 3.3.

Die Kartonverbundschicht 3.1 kann als einander überdeckende Schichten einer vierten Schichtfolge umfassen:
- eine erste Kartonschicht 3.1.3a;
- eine erste Haftvermittlerschicht 3.1.2a;
- eine Schicht mit dem dampfdiffusionsdichten Material 3.1.1;
- eine zweite Haftvermittlerschicht 3.1.2b; und
- eine zweite Kartonschicht 3.1.3b.

In Figur 4 ist ein flammhemmender flächenförmiger Kartonverbund 4 aufweisend einen Karton und ein dampfdiffusionsdichtes Material zur Herstellung von nicht dargestellten erfindungsgemäßen Rückwänden von Kühlgeräten, in einer vierten Ausführungsform stark vereinfacht dargestellt.

Der Kartonverbund 4 umfasst wenigstens als einander überdeckende Schichten einer ersten Schichtfolge:
- eine Kartonverbundschicht 4.1 aus dem Karton und dem dampfdiffusionsdichten Material;
- eine Brandschutzbeschichtung 4.2; und
- eine Schutzbeschichtung 4.3.

Die Kartonverbundschicht 4.1 kann als einander überdeckende Schichten einer fünften Schichtfolge umfassen:
- eine erste Schicht mit dem dampfdiffusionsdichten Material 4.1.1a;
- eine erste Haftvermittlerschicht 4.1.2a;
- eine Kartonschicht 4.1.3;
- eine zweite Haftvermittlerschicht 4.1.2b; und
- eine zweite Schicht mit dem dampfdiffusionsdichten Material 4.1.1b.

Die Brandschutzbeschichtungen 1.2, 2.2, 3.2, 4.2 können ein dämmschichtbildendes oder intumeszierendes Brandschutzmittel, insbesondere für Holz und Holzwerkstoffe aufweisen.

Das Flächengewicht der Brandschutzbeschichtungen 1.2, 2.2, 3.2, 4.2 kann in einem Bereich von 40 g/m² bis 200 g/m² liegen.

Das Brandschutzmittel kann einen Säurespender, insbesondere Ammoniumpolyphosphat, wenigstens einen Kohlenstoffspender, ein Treibmittel, insbesondere Melamin und vorzugsweise einen oder mehrere weitere Zusatzstoffe aufweisen.

Die Dicke der Schicht mit dem dampfdiffusionsdichten Material 1.1.1, 2.1.1, 3.1.1 bzw. der ersten und/oder der zweiten Schicht mit dem dampfdiffusionsdichten Material 4.1.1a, 4.1.1b kann in einem Bereich von 6 µm bis 200 µm liegen.

Das dampfdiffusionsdichte Material kann Aluminium aufweisen.

Zwischen der Schicht mit dem dampfdiffusionsdichten Material 1.1.1, 2.1.1, 3.1.1 bzw. der zweiten Schicht mit dem dampfdiffusionsdichten Material 4.1.1b und der Brandschutzbeschichtung 1.2, 2.2, 3.2, 4.2 kann eine Grundierungs- oder Primerschicht vorhanden sein (nicht näher dargestellt).

Zwischen der Brandschutzbeschichtung 1.2, 2.2, 3.2, 4.2 und der Schutzbeschichtung 1.3, 2.3, 3.3, 4.3 kann eine nicht dargestellte zusätzliche Haftvermittlerschicht vorhanden sein.

Die Haftvermittlerschicht 1.1.2, bzw. die erste Haftvermittlerschicht 2.1.2a, 3.1.2a, 4.1.2a, die zweite Haftvermittlerschicht 2.1.2b, 3.1.2b, 4.1.2b und/oder die zusätzliche Haftvermittlerschicht können Polyethylen, insbesondere mit einem Flächengewicht von 20 g/m², einen Heißleim oder dergleichen aufweisen.

Das Flächengewicht der Kartonschichten 1.1.3, 2.1.3, 4.1.3 bzw. der ersten Kartonschicht 3.1.3a und/oder der zweiten Kartonschicht 3.1.3b kann in einem Bereich von 200 g/m² bis 1000 g/m², insbesondere von 350 g/m² bis 550 g/m², liegen. Die Kartonschichten 1.1.3, 2.1.3, 3.1.3a, 3.1.3b, 4.1.3 können einen Graukarton aufweisen.

Die Schutzbeschichtungen 1.3, 2.3, 3.3, 4.3 können einen Schutzlack, eine ähnliche wässrige Beschichtung, Kunststoff oder Aluminium aufweisen. Die Schutzbeschichtung dient zum Schutz vor Abrieb, Verschmutzung und Feuchtigkeit.

### Bezugszeichenliste

- 1, 2, 3, 4: Flammhemmender flächenförmiger Kartonverbund
- 1.1, 2.1, 3.1, 4.1: Kartonverbundschicht
- 1.2, 2.2, 3.2, 4.2: Brandschutzbeschichtung
- 1.3, 2.3, 3.3, 4.3: Schutzbeschichtung
- 1.1.1, 2.1.1, 3.1.1: Schicht mit dem dampfdiffusionsdichten Material
- 4.1.1a: Erste Schicht mit dem dampfdiffusionsdichten Material
- 4.1.1b: Zweite Schicht mit dem dampfdiffusionsdichten Material
- 1.1.2: Haftvermittlerschicht
- 2.1.2a, 3.1.2a 4.1.2a: Erste Haftvermittlerschicht
- 2.1.2b, 3.1.2b 4.1.2b: Zweite Haftvermittlerschicht
- 1.1.3, 2.1.3 4.1.3: Kartonschicht
- 3.1.3a: Erste Kartonschicht
- 3.1.3b: Zweite Kartonschicht

## Patentansprüche

1. Rückwand eines Kühlgeräts, welche aus einem flammhemmenden flächenförmigen Kartonverbund (1,2,3,4) gebildet ist, welcher einen Karton und ein dampfdiffusionsdichtes Material aufweist und welcher als einander überdeckende Schichten einer ersten Schichtfolge wenigstens umfasst:
- eine Kartonverbundschicht (1.1,2.1,3.1,4.1) aus dem Karton und dem dampfdiffusionsdichten Material;
- eine Brandschutzbeschichtung (1.2,2.2,3.2,4.2); und
- eine Schutzbeschichtung (1.3,2.3,3.3,4.3).

2. Rückwand eines Kühlgeräts nach Anspruch 1, wobei die Kartonverbundschicht (1.1) als einander überdeckende Schichten einer zweiten Schichtfolge umfasst:
- eine Schicht mit dem dampfdiffusionsdichten Material (1.1.1);
- eine Haftvermittlerschicht (1.1.2); und
- eine Kartonschicht (1.1.3).

3. Rückwand eines Kühlgeräts nach Anspruch 1, wobei die Kartonverbundschicht (2.1) als einander überdeckende Schichten einer dritten Schichtfolge umfasst:
- eine Kartonschicht (2.1.3);
- eine erste Haftvermittlerschicht (2.1.2a);
- eine Schicht mit dem dampfdiffusionsdichten Material (2.1.1); und
- eine zweite Haftvermittlerschicht (2.1.2b).

4. Rückwand eines Kühlgeräts nach Anspruch 1, wobei die Kartonverbundschicht (3.1) als einander überdeckende Schichten einer vierten Schichtfolge umfasst:
- eine erste Kartonschicht (3.1.3a);
- eine erste Haftvermittlerschicht (3.1.2a);
- eine Schicht mit dem dampfdiffusionsdichten Material (3.1.1);
- eine zweite Haftvermittlerschicht (3.1.2b); und
- eine zweite Kartonschicht (3.1.3b).

5. Rückwand eines Kühlgeräts nach Anspruch 1, wobei die Kartonverbundschicht (4.1) als einander überdeckende Schichten einer fünften Schichtfolge umfasst:
- eine erste Schicht mit dem dampfdiffusionsdichten Material (4.1.1a);
- eine erste Haftvermittlerschicht (4.1.2a);
- eine Kartonschicht (4.1.3);
- eine zweite Haftvermittlerschicht (4.1.2b); und
- eine zweite Schicht mit dem dampfdiffusionsdichten Material (4.1.1b).

6. Rückwand eines Kühlgeräts nach einem der Ansprüche 1 bis 5, wobei die Brandschutzbeschichtung (1.2,2.2,3.2,4.2) ein dämmschichtbildendes oder intumeszierendes Brandschutzmittel, insbesondere für Holz und Holzwerkstoffe aufweist, und/oder das Flächengewicht der Brandschutzbeschichtung (1.2,2.2,3.2,4.2) in einem Bereich von 40 g/m² bis 200 g/m² liegt.

7. Rückwand eines Kühlgeräts nach Anspruch 6, wobei das Brandschutzmittel einen Säurespender, insbesondere Ammoniumpolyphosphat, wenigstens einen Kohlenstoffspender, ein Treibmittel, insbesondere Melamin und vorzugsweise einen oder mehrere weitere Zusatzstoffe aufweist.

8. Rückwand eines Kühlgeräts nach einem der Ansprüche 2 bis 7, wobei die Dicke der Schicht mit dem dampfdiffusionsdichten Material (1.1.1,2.1.1,3.1.1) bzw. der ersten und/oder der zweiten Schicht mit dem dampfdiffusionsdichten Material (4.1.1a,4.1.1b) in einem Bereich von 6 µm bis 200 µm liegt.

9. Rückwand eines Kühlgeräts nach einem der Ansprüche 1 bis 8, wobei das dampfdiffusionsdichte Material Aluminium aufweist.

10. Rückwand eines Kühlgeräts nach einem der Ansprüche 2 bis 9, wobei zwischen der Schicht mit dem dampfdiffusionsdichten Material (1.1.1,2.1.1,3.1.1) bzw. der zweiten Schicht mit dem dampfdiffusionsdichten Material (4.1.1b) und der Brandschutzbeschichtung (1.2,2.2,3.2,4.2) eine Grundierungs- oder Primerschicht vorhanden ist.

11. Rückwand eines Kühlgeräts nach einem der Ansprüche 1 bis 10, wobei zwischen der Brandschutzbeschichtung (1.2,2.2,3.2,4.2) und der Schutzbeschichtung (1.3,2.3,3.3,4.3) eine zusätzliche Haftvermittlerschicht vorhanden ist.

12. Rückwand eines Kühlgeräts nach einem der Ansprüche 2 bis 10, wobei die Haftvermittlerschicht (1.1.2) bzw. die erste Haftvermittlerschicht (2.1.2a,3.1.2a,4.1.2a), die zweite Haftvermittlerschicht (2.1.2b,3.1.2b,4.1.2b) und/oder die zusätzliche Haftvermittlerschicht Polyethylen, insbesondere mit einem Flächengewicht von 20 g/m², einen Heißleim oder dergleichen aufweisen, und/oder das Flächengewicht der Kartonschicht (1.1.3,2.1.3,4.1.3) bzw. der ersten und/oder der zweiten Kartonschicht (3.1.3a,3.1.3b) in einem Bereich von 200 g/m² bis 1000 g/m², insbesondere von 350 g/m² bis 550 g/m², liegt.

13. Rückwand eines Kühlgeräts nach einem der Ansprüche 1 bis 12, wobei die Schutzbeschichtung (1.3,2.3,3.3,4.3) einen Schutzlack, eine ähnliche wässrige Beschichtung, Kunststoff, eine Folie, insbesondere eine Kunststofffolie oder Aluminium aufweist.

14. Kühlgerät, insbesondere Kühl- oder Eisschrank mit einer Rückwand nach einem der Ansprüche 1 bis 13.

## Claims

1. Back panel of a refrigeration appliance, formed of a flame-retardant sheetlike cardboard composite (1, 2, 3, 4) which comprises a cardboard and a material impervious to vapour diffusion and which comprises, as mutually overlaying layers of a first layer sequence, at least:
- a cardboard composite layer (1.1, 2.1, 3.1, 4.1) comprising the cardboard and the material impervious to vapour diffusion;
- a fire prevention coating (1.2, 2.2, 3.2, 4.2); and
- a protective coating (1.3, 2.3, 3.3, 4.3).

2. Back panel of a refrigeration appliance according to Claim 1, wherein the cardboard composite layer (1.1), as mutually overlaying layers of a second layer sequence, comprises:
- a layer with the material impervious to vapour diffusion (1.1.1);
- an adhesion promoter layer (1.1.2); and
- a cardboard layer (1.1.3).

3. Back panel of a refrigeration appliance according to Claim 1, wherein the cardboard composite layer (2.1), as mutually overlaying layers of a third layer sequence, comprises:
- a cardboard layer (2.1.3);
- a first adhesion promoter layer (2.1.2a);
- a layer with the material impervious to vapour diffusion (2.1.1); and
- a second adhesion promoter layer (2.1.2b).

4. Back panel of a refrigeration appliance according to Claim 1, wherein the cardboard composite layer (3.1), as mutually overlaying layers of a fourth layer sequence, comprises:
- a first cardboard layer (3.1.3a);
- a first adhesion promoter layer (3.1.2a);
- a layer with the material impervious to vapour diffusion (3.1.1);
- a second adhesion promoter layer (3.1.2b); and
- a second cardboard layer (3.1.3b).

5. Back panel of a refrigeration appliance according to Claim 1, wherein the cardboard composite layer (4.1), as mutually overlaying layers of a fifth layer sequence, comprises:
- a first layer with the material impervious to vapour diffusion (4.1.1a);
- a first adhesion promoter layer (4.1.2a);
- a cardboard layer (4.1.3);
- a second adhesion promoter layer (4.1.2b); and
- a second layer with the material impervious to vapour diffusion (4.1.1b).

6. Back panel of a refrigeration appliance according to any of Claims 1 to 5, wherein the fire prevention coating (1.2, 2.2, 3.2, 4.2) comprises a fire retardant, more particularly for wood and wood-based materials, which forms insulating layers or is intumescent, and/or the surface weight of the fire prevention coating (1.2, 2.2, 3.2, 4.2) is situated in a range from 40 g/m² to 200 g/m².

7. Back panel of a refrigeration appliance according to Claim 6, wherein the fire retardant comprises an acid donor, more particularly ammonium polyphosphate, at least one carbon donor, a blowing agent, more particularly melamine, and preferably one or more further additives.

8. Back panel of a refrigeration appliance according to any of Claims 2 to 7, wherein the thickness of the layer with the material impervious to vapour diffusion (1.1.1, 2.1.1, 3.1.1) or of the first and/or of the second layer with the material impervious to vapour diffusion (4.1.1a, 4.1.1b) is situated in a range from 6 µm to 200 µm.

9. Back panel of a refrigeration appliance according to any of Claims 1 to 8, wherein the material impervious to vapour diffusion comprises aluminium.

10. Back panel of a refrigeration appliance according to any of Claims 2 to 9, wherein a priming coat or primer layer is present between the layer with the material impervious to vapour diffusion (1.1.1, 2.1.1, 3.1.1) or the second layer with the material impervious to vapour diffusion (4.1.1b) and the fire prevention coating (1.2, 2.2, 3.2, 4.2).

11. Back panel of a refrigeration appliance according to any of Claims 1 to 10, wherein an additional adhesion promoter layer is present between the fire prevention coating (1.2, 2.2, 3.2, 4.2) and the protective coating (1.3, 2.3, 3.3, 4.3).

12. Back panel of a refrigeration appliance according to any of Claims 2 to 10, wherein the adhesion promoter layer (1.1.2) or the first adhesion promoter layer (2.1.2a, 3.1.2a, 4.1.2a), the second adhesion promoter layer (2.1.2b, 3.1.2b, 4.1.2b) and/or the additional adhesion promoter layer comprise polyethylene, more particularly with a surface weight of 20 g/m², a hot glue or the like, and/or the surface weight of the cardboard layer (1.1.3, 2.1.3, 4.1.3) or of the first and/or of the second cardboard layer (3.1.3a, 3.1.3b) is situated in a range from 200 g/m² to 1000 g/m², more particularly from 350 g/m² to 550 g/m².

13. Back panel of a refrigeration appliance according to any of Claims 1 to 12, wherein the protective coating (1.3, 2.3, 3.3, 4.3) comprises a protective varnish, a similar aqueous coating, plastic, a foil, more particularly a plastics foil or aluminium.

14. Refrigeration appliance, more particularly cooling cabinet or refrigerator, having a back panel according to any of Claims 1 to 13.

## Revendications

1. Paroi arrière d'un appareil de réfrigération formé d'un composite en carton plan ignifuge (1, 2, 3, 4) comprenant un carton et un matériau étanche à la diffusion de vapeur et comportant, en couches se recouvrant mutuellement, au moins :
- une couche de carton composite (1.1, 2.1, 3.1, 4.1) réalisée dans le carton et le matériau étanche à la diffusion de vapeur ;
- un revêtement ignifuge (1.2, 2.2, 3.2, 4.2) ; et
- un revêtement de protection (1.3, 2.3, 3.3, 4.3).

2. Paroi arrière d'un appareil de réfrigération selon la revendication 1, dans laquelle la couche en carton composite (1.1) comporte, en couches se recouvrant mutuellement d'une deuxième suite de couches :
- une couche avec le matériau étanche à la diffusion de vapeur (1.1.1) ;
- une couche d'agent promoteur de l'adhésion (1.1.2) ; et
- une couche de carton (1.1.3).

3. Paroi arrière d'un appareil de réfrigération selon la revendication 1, dans laquelle la couche en carton composite (2.1) comporte, en couches se recouvrant mutuellement d'une troisième suite de couches :
- une couche de carton (2.1.3) ;
- une première couche d'agent promoteur de l'adhésion (2.1.2a) ;
- une couche avec le matériau étanche à la diffusion de vapeur (2.1.1) ; et
- une seconde couche d'agent promoteur de l'adhésion (2.1.2b).

4. Paroi arrière d'un appareil de réfrigération selon la revendication 1, dans laquelle la couche en carton composite (3.1) comporte, en couches se recouvrant mutuellement d'une quatrième suite de couches :
- une première couche de carton (3.1.3a) ;
- une première couche d'agent promoteur de l'adhésion (3.1.2a) ;
- une couche avec le matériau étanche à la diffusion de vapeur (3.1.1) ;
- une seconde couche d'agent promoteur de l'adhésion (3.1.2b) ; et
- une seconde couche de carton (3.1.3b).

5. Paroi arrière d'un appareil de réfrigération selon la revendication 1, dans laquelle la couche en carton composite (4.1) comporte, en couches se recouvrant mutuellement d'une cinquième suite de couches :
- une première couche avec le matériau étanche à la diffusion de vapeur (4.1.1a) ;
- une première couche d'agent promoteur de l'adhésion (4.1.2a);
- une couche de carton (4.1.3) ;
- une seconde couche d'agent promoteur de l'adhésion (4.1.2b) ; et
- une seconde couche avec le matériau étanche à la diffusion de vapeur (4.1.1b).

6. Paroi arrière d'un appareil de réfrigération selon l'une des revendications 1 à 5, dans laquelle le revêtement ignifuge (1.2, 2.2, 3.2, 4.2) comprend un produit d'ignifugation formant une couche isolante ou intumescent, en particulier pour le bois ou les matériaux à base de bois, et/ou le poids surfacique du revêtement ignifuge (1.2, 2.2, 3.2, 4.2) se situe dans une plage de 40 g/m² à 200 g/m².

7. Paroi arrière d'un appareil de réfrigération selon la revendication 6, dans laquelle le produit d'ignifugation comporte un dispensateur d'acide, notamment du polyphosphate d'ammonium, au moins un dispensateur de carbone, un agent propulseur, notamment de la mélamine, et de préférence un ou plusieurs autres additifs.

8. Paroi arrière d'un appareil de réfrigération selon l'une des revendications 2 à 7, dans laquelle l'épaisseur de la couche avec le matériau étanche à la diffusion de vapeur (1.1.1, 2.1.1, 3.1.1) ou la première et/ou la seconde couche avec le matériau étanche à la diffusion de vapeur (4.1.1a, 4.1.1b) se situe dans une plage de 6 µm à 200 µm.

9. Paroi arrière d'un appareil de réfrigération selon l'une des revendications 1 à 8, dans laquelle le matériau étanche à la diffusion de vapeur comporte de l'aluminium.

10. Paroi arrière d'un appareil de réfrigération selon l'une des revendications 2 à 9, dans laquelle une couche de fond ou une couche primaire est présente entre la couche avec le matériau étanche à la diffusion de vapeur (1.1.1, 2.1.1, 3.1.1) ou la seconde couche avec le matériau étanche à la diffusion de vapeur (4.1.1b) et le revêtement ignifuge (1.2, 2.2, 3.2, 4.2).

11. Paroi arrière d'un appareil de réfrigération selon l'une des revendications 1 à 10, dans laquelle une couche d'agent promoteur de l'adhésion supplémentaire est présente entre le revêtement ignifuge (1.2, 2.2, 3.2, 4.2) et le revêtement de protection (1.3, 2.3 ,3.3 ,4.3).

12. Paroi arrière d'un appareil de réfrigération selon l'une des revendications 2 à 10, dans laquelle la couche d'agent promoteur de l'adhésion (1.1.2) ou la première couche d'agent promoteur de l'adhésion (2.1.2a, 3.1.2a, 4.1.2a), la seconde couche d'agent promoteur de l'adhésion (2.1.2b, 3.1.2b, 4.1.2b) et/ou la couche d'agent promoteur de l'adhésion supplémentaire comportent du polyéthylène, notamment avec un poids surfacique de 20 g/m², une colle thermofusible ou similaire, et/ou le poids surfacique de la couche de carton (1.1.3 , 2.1.3 , 4.1.3) ou de la première et/ou de la seconde couche de carton (3.1.3a, 3.1.3b) se situant dans une plage de 200 g/m² à 1000 g/m², notamment de 350 g/m² à 550 g/m².

13. Paroi arrière d'un appareil de réfrigération selon l'une des revendications 1 à 12, dans laquelle le revêtement de protection (1.3, 2.3, 3.3, 4.3) comporte un vernis de protection, un revêtement aqueux similaire, de la matière plastique, un film, notamment un film en matière plastique ou en aluminium.

14. Appareil de réfrigération, notamment réfrigérateur ou congélateur avec une paroi arrière selon l'une des revendications 1 à 13.
